# EUROPÄISCHE PATENTSCHRIFT

(11) **EP 4 013 975 B1**
(45) Veröffentlichungstag und Bekanntmachung des Hinweises auf die Patenterteilung: **23.08.2023**
(21) Anmeldenummer: 20754622.7
(22) Anmeldetag: 22.07.2020
(51) Int. Cl.: F16F 1/38

(54) **ELASTISCHES LAGER**
ELASTIC BEARING
PALIER ÉLASTIQUE

(30) Priorität: 10.10.2019 DE 102019215570
(43) Veröffentlichungstag der Anmeldung: 22.06.2022
(73) Patentinhaber: Siemens Mobility GmbH, 81739 München (DE)
(72) Erfinder: ZÄCH, Martin, 83064 Raubling (DE)
(74) Vertreter: Siemens Patent Attorneys
(86) Internationale Anmeldenummer: PCT/EP2020/070674
(87) Internationale Veröffentlichungsnummer: WO 2021/069123

(56) Entgegenhaltungen:
- EP-A1- 0 905 405
- EP-A2- 2 905 503
- WO-A1-2018/196901
- DE-A1- 2 621 787
- DE-A1-102004 051 566
- DE-A1-102007 012 772
- DE-A1-102017 103 779

## Beschreibung

Die Erfindung betrifft ein elastisches Lager.

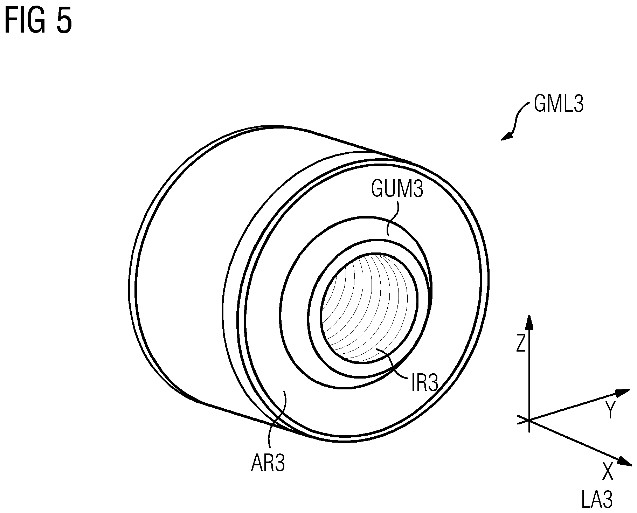

Derartige elastische Lager sind als sogenannte Gummi-Metall-Lager aus dem Stand der Technik bekannt. FIG 5 zeigt den Aufbau eines Gummi-Metall-Lagers GML3.

Das Gummi-Metall-Lager GML3 weist einen hohlen Außenzylinder AR3 auf, der eine Außenseite bzw. einen Außenkörper des Gummi-Metall-Lagers GML3 bildet. Das Gummi-Metall-Lager GML3 weist einen hohlen Innenzylinder IR3 auf, der eine Innenseite bzw. einen Innenkörper des Gummi-Metall-Lagers GML3 bildet.

Der Außenzylinder AR3 umschließt ringförmig den Innenzylinder IR3, so dass beide Zylinder eine gemeinsame Längsachse aufweisen. Diese gemeinsame Längsachse wird als Lager-Längsachse LA3 bezeichnet und bildet in dieser Darstellung eine erste Raumachse bzw. x-Achse eines räumlichen Koordinatensystems.

Eine zylinderförmige elastische Schicht GUM3, die beispielsweise aus Gummi gefertigt ist, ist hier beispielhaft ringförmig umlaufend zwischen dem Außenzylinder AR3 und dem Innenzylinder IR3 angeordnet, so dass auch deren Achse mit der Lager-Längsachse LA3 zusammenfällt.

Im dargestellten räumlichen Koordinatensystem mit den drei in einem gemeinsamen Punkt senkrecht aufeinander stehenden Raumachsen x, y und z besitzt das Gummi-Metall-Lager GML3 die folgenden sechs Freiheitsgrade:
- rotatorische (drehende) Bewegung von Lagerelementen um die Lager-Längsachse LA3 bzw. um die x-Achse,
- rotatorische Bewegung bzw. Kippbewegung von Lagerelementen um die y-Achse,
- rotatorische Bewegung bzw. Kippbewegung von Lagerelementen um die z-Achse,
- translatorische Bewegung von Lagerelementen in Richtung der Lager-Längsachse LA3, bzw. in Richtung der x-Achse,
- translatorische Bewegung von Lagerelementen in Richtung der y-Achse, und
- translatorische Bewegung von Lagerelementen in Richtung der z-Achse.

In technischen Anwendungen kann es vorteilhaft sein, ein Gummi-Metall-Lager mit eingeschränkten Freiheitsgraden zu verwenden. Beispielsweise kann es vorteilhaft sein, beim Gummi-Metall-Lager zumindest eine translatorische Bewegung in einer Raumrichtung zu verhindern bzw. definiert zu reduzieren.

Aus Druckschrift EP 2 905 503 A2 ist ein Lager mit beschränkten Freiheitsgraden bekannt. Drehbewegungen von Lagerkomponenten in Lagerlängsrichtung und in Richtung von zwei dazu senkrechten Raumachsen sind gesperrt. Eine Translationsbewegung der Lagerkomponenten in Lagerlängsrichtung ist möglich, während Translationsbewegungen der Lagerkomponenten in Richtung von Raumachsen senkrecht zur Lagerlängsrichtung gesperrt sind.

Aus Druckschrift EP 0 905 405 A1 ist ein Lager bekannt. Eine Drehbewegung von Lagerkomponenten in Lagerlängsrichtung und in Richtung zu zwei dazu senkrechten Raumachsen sind im teilweise begrenzten Ausmaß möglich. Eine Translationsbewegung der Lagerkomponenten in Lagerlängsrichtung und in Richtung der dazu senkrechten Raumachsen sind im begrenzten Ausmaß möglich.

Aus Druckschrift E 10 2017 103 779 A1 ist ein Lager mit beschränkten Freiheitsgraden bekannt. Drehbewegungen von Lagerkomponenten in Lagerlängsrichtung und in Richtung von zwei dazu senkrechten Raumachsen sind gesperrt. Eine Translationsbewegung der Lagerkomponenten in Lagerlängsrichtung ist möglich, während Translationsbewegungen der Lagerkomponenten in Richtung von Raumachsen senkrecht zur Lagerlängsrichtung im begrenzten Ausmaß möglich sind.

Es ist die Aufgabe der vorliegenden Erfindung, ein Gummi-Metall-Lager mit eingeschränkten Freiheitsgraden anzugeben.

Diese Aufgabe wird durch die Merkmale des Anspruchs 1 gelöst.

Die Erfindung betrifft ein elastisches Lager mit einem Innenkörper, einem Außenkörper und mit einer elastischen Schicht. Der Außenkörper umfasst dabei den Innenkörper derart, dass deren Längsachsen parallel zu einer ersten Raumachse eines räumlichen Koordinatensystems sind.

Die elastische Schicht ist zwischen dem Außenkörper und dem Innenkörper positioniert. In Richtung einer zweiten Raumachse weisen der Außenkörper und der Innenkörper zueinander einen minimalen Abstand auf, der frei von der elastischen Schicht ist. In Richtung einer dritten Raumachse weisen der Außenkörper und der Innenkörper zueinander einen gleichen Abstand auf, in dem die elastische Schicht angeordnet ist, um den gleichen Abstand aufzufüllen.

In einer bevorzugten Ausgestaltung wird unter dem Begriff "minimaler Abstand" verstanden, dass sich im Rahmen von Fertigungstoleranzen der Abstand zu einem Luftspalt geringer bzw. geringster Ausdehnung reduziert, bzw. dass sich im Extremfall Innenkörper und Außenkörper berühren.

Erfindungsgemäß weist der Außenkörper und der Innenkörper eine Ringform bzw. eine hohle Zylindergrundform auf.

Erfindungsgemäß ist die elastische Schicht aus Gummi gefertigt.

In einer nicht beanspruchten Ausgestaltung weisen in Richtung der zweiten Raumachse der Außenkörper und der Innenkörper jeweils eine Fläche auf, wobei diese Flächen wiederum einen minimalen Abstand zueinander aufweisen.

Erfindungsgemäß weisen in Richtung der zweiten Raumachse der Außenkörper und der Innenkörper längs einer Linie, die parallel zur ersten Raumachse ist, einen minimalen Abstand zueinander auf.

Erfindungsgemäß umfasst der Außenkörper den Innenkörper derart, dass Längsachsen des Außenkörpers und des Innenkörpers aufeinander liegen und damit eine gemeinsame Lager-Längsachse bilden, die der ersten Raumachse des räumlichen Koordinatensystems entspricht.

Durch die vorliegende Erfindung wird die Geometrie der Elemente des Gummi-Metall-Lagers derart angepasst, dass zumindest ein Freiheitsgrad gesperrt wird.

Durch die vorliegende Erfindung wird ein Gummi-Metall-Lager mit gesperrten Freiheitsgraden zur Verfügung gestellt, das insbesondere bei aktiven Fahrwerken von Schienenfahrzeugen zur Verwendung kommt.

Durch die vorliegende Erfindung könnte beispielsweise beim aktiven Fahrwerk das aktive Element die Steifigkeit in einer Raumrichtung definieren. Diese Raumrichtung wird bei den anderen elastischen Elementen im Lastpfad des Fahrwerks dann gesperrt.

Durch die vorliegende Erfindung werden neue Fahrwerk-Designs ermöglicht, die gemäß dem bekannten Stand der Technik nicht realisierbar sind.

Nachfolgend wird die vorliegende Erfindung beispielhaft anhand einer Zeichnung näher erläutert. Dabei zeigt:
- FIG 1: ein nicht beanspruchtes Ausführungsbeispiel in Bezug zur vorliegenden Erfindung,
- FIG 2: mit Bezug auf FIG 1 eine räumliche Darstellung des Ausführungsbeispiels,
- FIG 3: ein Ausführungsbeispiel der vorliegenden Erfindung, und
- FIG 4: mit Bezug auf FIG 3 eine räumliche Darstellung des Ausführungsbeispiels der vorliegenden Erfindung, und
- FIG 5: das vorstehend in der Einleitung beschriebene elastische Lager gemäß dem bekannten Stand der Technik.

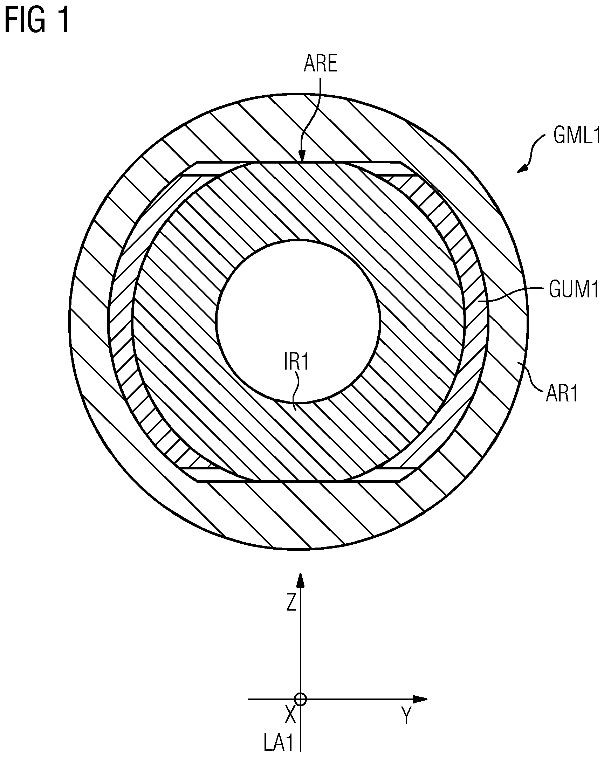

FIG 1 zeigt ein nicht beanspruchtes Gummi-Metall-Lager GML1.

Das Gummi-Metall-Lager GML1 weist einen Außenkörper AR1 auf, der bevorzugt eine hohle Zylindergrundform hat und eine Außenseite des Gummi-Metall-Lagers GML1 bildet.

Das Gummi-Metall-Lager GML1 weist einen Innenkörper IR1 auf, der bevorzugt eine hohle Zylindergrundform hat und eine Innenseite des Gummi-Metall-Lagers GML1 bildet.

Der Außenkörper AR1 umfasst den Innenkörper IN1 derart, dass beide Ringe eine gemeinsame Symmetrieachse als Lager-Längsachse LA1 aufweisen.

Im dargestellten räumlichen Koordinatensystem mit den drei in einem gemeinsamen Punkt senkrecht aufeinander stehenden Raumachsen x, y und z bildet die Lager-Längsachse LA1 die x-Achse.

Eine Gummischicht GUM1 ist als elastische Schicht ringförmig zwischen dem Außenkörper AR1 und dem Innenkörper IR1 wie folgt angeordnet:
Der Außenkörper AR1 weist in Richtung der z-Achse zum Innenkörper IR1 einen minimalen Abstand auf, in dem keine Gummischicht GUM1 angeordnet ist bzw. der frei von der Gummischicht GUM1 ist.

In diesem Ausführungsbeispiel berührt der Außenkörper AR1 den Innenkörper IR1 längs einer Fläche ARE flächig.

Der Außenkörper AR1 weist in Richtung der y-Achse zum Innenkörper IR1 einen im wesentlichen konstanten Abstand auf, in dem zumindest teilweise die Gummischicht GUM1 angeordnet ist.

Damit werden einige Freiheitsgrade des Gummi-Metall-Lagers GML1 gesperrt.

Durch diese Ausgestaltung weist das Gummi-Metall-Lager GML1 folgende Freiheitsgrade auf:
- rotatorische (drehende) Bewegung der Lagerelemente um die z-Achse,
- translatorische Bewegung der Lagerelemente in Richtung der Lager-Längsachse LA1 bzw. x-Achse, und
- translatorische Bewegung der Lagerelemente in Richtung der y-Achse.

Entsprechend sind durch diese Ausgestaltung beim Gummi-Metall-Lager GML1 folgende Freiheitsgrade gesperrt:
- rotatorische (drehende) Bewegung der Lagerelemente um die Lager-Längsachse LA1 bzw. um die x-Achse,
- rotatorische (drehende) Bewegung der Lagerelemente um die y-Achse, und
- translatorische Bewegung der Lagerelemente in Richtung der z-Achse.

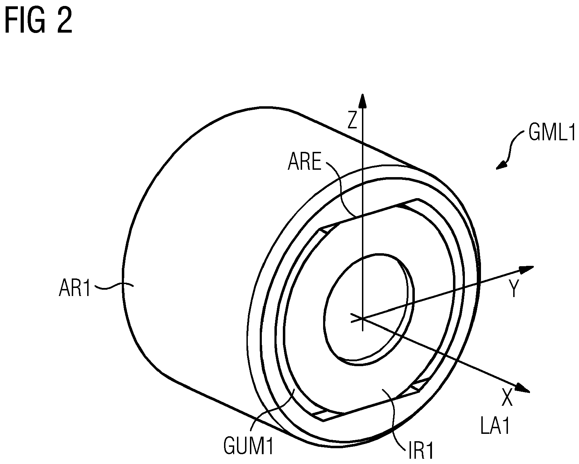

FIG 2 zeigt mit Bezug auf FIG 1 eine räumliche Darstellung des Gumme-Metal-Lagers.

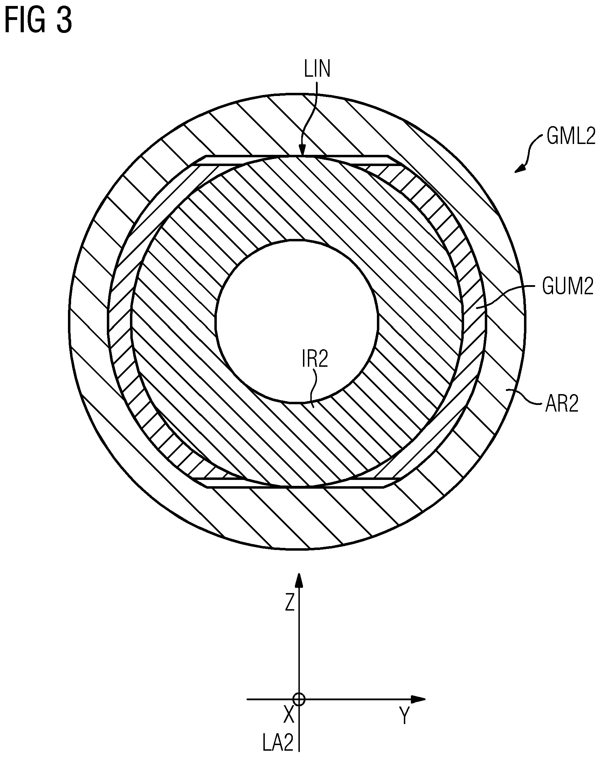

FIG 3 zeigt ein zweites erfindungsgemäßes Gummi-Metall-Lager GML2.

Das Gummi-Metall-Lager GML2 weist einen Außenkörper AR2 auf, der bevorzugt eine hohle Zylindergrundform hat und eine Außenseite des Gummi-Metall-Lagers GML2 bildet.

Das Gummi-Metall-Lager GML2 weist einen Innenkörper IR2 auf, der bevorzugt eine hohle Zylindergrundform hat und eine Innenseite des Gummi-Metall-Lagers GML2 bildet.

Der Außenkörper AR2 umfasst den Innenkörper IN2 derart, dass beide Ringe eine gemeinsame Symmetrieachse als Lager-Längsachse LA2 aufweisen.

Im dargestellten räumlichen Koordinatensystem mit den drei in einem gemeinsamen Punkt senkrecht aufeinander stehenden Raumachsen x, y und z bildet die Lager-Längsachse LA2 die x-Achse.

Eine Gummischicht GUM2 ist als elastische Schicht ringförmig zwischen dem Außenkörper AR2 und dem Innenkörper IR2 wie folgt angeordnet:
Der Außenkörper AR2 weist in Richtung der z-Achse zum Innenkörper IR2 einen minimalen Abstand auf, in dem keine Gummischicht GUM2 angeordnet ist bzw. der frei von der Gummischicht GUM2 ist.

In diesem Ausführungsbeispiel berührt der Außenkörper AR2 den Innenkörper IR2 längs einer Linie LIN, die parallel zur x-Achse ist.

Der Außenkörper AR2 weist in Richtung der y-Achse zum Innenkörper IR2 einen im wesentlichen konstanten Abstand auf, in dem zumindest teilweise die Gummischicht GUM2 angeordnet ist.

Damit werden wieder Freiheitsgrade des Gummi-Metall-Lagers GML2 gesperrt.

Durch diese Ausgestaltung weist das Gummi-Metall-Lager GML2 folgende Freiheitsgrade auf:
- rotatorische (drehende) Bewegung der Lagerelemente um die Lager-Längsachse LA2 bzw. um die x-Achse,
- rotatorische (drehende) Bewegung der Lagerelemente um die z-Achse,
- translatorische Bewegung der Lagerelemente in Richtung der Lager-Längsachse LA2 bzw. x-Achse, und
- translatorische Bewegung der Lagerelemente in Richtung der y-Achse.

Entsprechend sind durch diese Ausgestaltung beim Gummi-Metall-Lager GML2 folgende Freiheitsgrade gesperrt:
- rotatorische (drehende) Bewegung der Lagerelemente um die y-Achse, und
- translatorische Bewegung der Lagerelemente in Richtung der z-Achse.

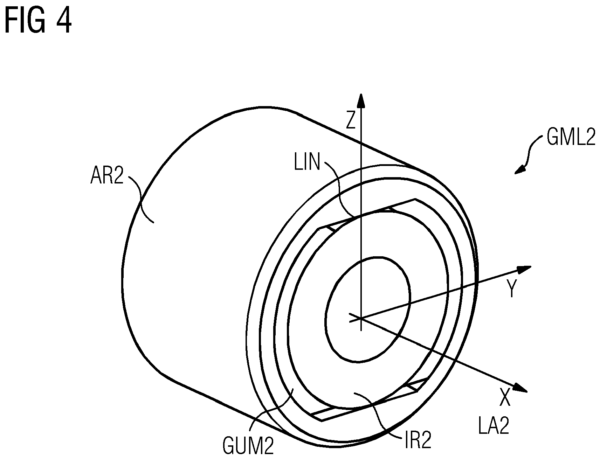

FIG 4 zeigt mit Bezug auf FIG 3 eine räumliche Darstellung des Ausführungsbeispiels der vorliegenden Erfindung.

## Patentansprüche

1. Elastisches Lager (GML2),
- mit einem Innenkörper (IR2), einem Außenkörper (AR2) und mit einer elastischen Schicht (GUM2) als Lagerelemente,
- bei dem die elastische Schicht (GUM1, GUM2) aus Gummi gefertigt ist,
- bei dem der Außenkörper (AR2) und der Innenkörper (IR2) eine hohle Zylindergrundform aufweist,
- bei dem der Außenkörper (AR2) den Innenkörper (IR2) derart umfasst, dass Längsachsen des Außenkörpers und des Innenkörpers aufeinander liegen und damit eine gemeinsame Lager-Längsachse bilden, die einer ersten Raumachse eines räumlichen Koordinatensystems entspricht,
- bei dem die elastische Schicht (GUM2) zwischen dem Au-ßenkörper (AR2) und dem Innenkörper (IR2) positioniert ist,
- bei dem in Richtung einer zweiten Raumachse (z) der Au-ßenkörper (AR2) und der Innenkörper (IR2) längs einer Linie (LIN), die parallel zur ersten Raumachse (x) ist, zueinander einen minimalen Abstand aufweisen, der frei von der elastischen Schicht (GUM2) ist,
- bei dem in Richtung einer dritten Raumachse (y) der Au-ßenkörper (AR2) und der Innenkörper (IR2) zueinander einen gleichen Abstand aufweisen, in dem die elastische Schicht (GUM2) angeordnet ist, um den gleichen Abstand aufzufüllen,
- so dass durch diese Ausgestaltung das elastische Lager (GML2) folgende Freiheitsgrade aufweist:
• rotatorische Bewegung der Lagerelemente um die erste Raumachse (x),
• rotatorische Bewegung der Lagerelemente um die zweite Raumachse (z),
• translatorische Bewegung der Lagerelemente in Richtung der ersten Raumachse (x), und
• translatorische Bewegung der Lagerelemente in Richtung der dritten Raumachse (y), und
- dass durch diese Ausgestaltung beim elastischen Lager (GML2) folgende Freiheitsgrade gesperrt sind:
• rotatorische Bewegung der Lagerelemente um die dritte Raumachse (y), und
• translatorische Bewegung der Lagerelemente in Richtung der zweiten Raumachse (z).

## Claims

1. Elastic bearing (GML2),
- having an inner body (IR2), an outer body (AR2) and having an elastic layer (GUM2) in the form of bearing elements,
- in which the elastic layer (GUM1, GUM2) is manufactured from rubber,
- in which the outer body (AR2) and the inner body (IR2) have a hollow cylindrical basic shape,
- in which the outer body (AR2) encloses the inner body (IR2) in such a way that longitudinal axes of the outer body and of the inner body are in line and thus form a common bearing longitudinal axis, which corresponds to a first spatial axis of a spatial coordinate system,
- in which the elastic layer (GUM2) is positioned between the outer body (AR2) and the inner body (IR2),
- in which, in the direction of a second spatial axis (z), the outer body (AR2) and the inner body (IR2) have a minimum spacing from one another which is free of the elastic layer (GUM2) along a line (LIN) parallel to the first spatial axis (x),
- in which, in the direction of a third spatial axis (y), the outer body (AR2) and the inner body (IR2) have an identical spacing from one another in which the elastic layer (GUM2) is arranged, in order to fill the identical spacing,
- with the result that, by virtue of this configuration, the elastic bearing (GML2) has the following degrees of freedom:
• rotational movement of the bearing elements about the first spatial axis (x),
• rotational movement of the bearing elements about the second spatial axis (z),
• translational movement of the bearing elements in the direction of the first spatial axis (x), and
• translational movement of the bearing elements in the direction of the third spatial axis (y), and
- that, by virtue of this configuration, the following degrees of freedom of the elastic bearing (GML2) are blocked:
• rotational movement of the bearing elements about the third spatial axis (y), and
• translational movement of the bearing elements in the direction of the second spatial axis (z).

## Revendications

1. Palier élastique (GML2),
- avec un corps intérieur (IR2), un corps extérieur (AR2) et une couche élastique (GUM2) comme éléments d'appui,
- dans lequel la couche élastique (GUM1, GUM2) est fabriquée en caoutchouc,
- dans lequel le corps extérieur (AR2) et le corps intérieur (IR2) ont une forme de base cylindrique creuse,
- dans lequel le corps extérieur (AR2) entoure le corps intérieur (IR2) de telle sorte que les axes longitudinaux du corps extérieur et du corps intérieur sont superposés et forment ainsi un axe longitudinal de palier commun qui correspond à un premier axe spatial d'un système de coordonnées spatiales,
- dans lequel la couche élastique (GUM2) est positionnée entre le corps extérieur (AR2) et le corps intérieur (IR2),
- dans lequel, dans la direction d'un deuxième axe spatial (z), le corps extérieur (AR2) et le corps intérieur (IR2) présentent, le long d'une ligne (LIN) qui est parallèle au premier axe spatial (x), un espacement minimal entre eux qui est exempt de couche élastique (GUM2),
- dans lequel, dans la direction d'un troisième axe spatial (y), le corps extérieur (AR2) et le corps intérieur (IR2) présentent un espacement égal entre eux, dans lequel la couche élastique (GUM2) est disposée pour combler le même espacement,
- de sorte que, grâce à cette configuration, le support élastique (GML2) présente les degrés de liberté suivants :
- mouvement de rotation des éléments d'appui autour du premier axe spatial (x),
- mouvement de rotation des éléments d'appui autour du deuxième axe spatial (z),
- mouvement de translation des éléments de palier dans la direction du premier axe spatial (x), et
- mouvement de translation des éléments de support dans la direction du troisième axe spatial (y), et
- que, grâce à cette configuration, les degrés de liberté suivants sont bloqués pour le palier élastique (GML2) :
- mouvement de rotation des éléments d'appui autour du troisième axe spatial (y), et
- mouvement de translation des éléments de palier dans la direction du deuxième axe spatial (z).
